(19) Europäisches Patentamt

European Patent Office

Office européen des brevets

(11) **EP 1 194 963 B1**

(12) **EUROPÄISCHE PATENTSCHRIFT**

(45) Veröffentlichungstag und Bekanntmachung des Hinweises auf die Patenterteilung:
**05.07.2006 Patentblatt 2006/27**

(21) Anmeldenummer: **00938604.6**

(22) Anmeldetag: **18.04.2000**

(51) Int Cl.:
*H01M 4/02* (2006.01)   *H01M 4/04* (2006.01)
*H01M 4/62* (2006.01)   *H01M 10/40* (2006.01)
*H01M 6/18* (2006.01)   *H01G 9/00* (2006.01)
*G02F 1/15* (2006.01)   *H01L 31/00* (2006.01)
*C08L 61/06* (2006.01)

(86) Internationale Anmeldenummer:
**PCT/EP2000/003541**

(87) Internationale Veröffentlichungsnummer:
**WO 2000/063984 (26.10.2000 Gazette 2000/43)**

(54) **PASTÖSE MASSEN MIT NANOKRISTALLINEN MATERIALIEN FÜR ELEKTROCHEMISCHE BAUELEMENTE UND DARAUS HERGESTELLTE SCHICHTEN UND ELEKTROCHEMISCHE BAUELEMENTE**

PASTY MATERIALS WITH NANOCRYSTALLINE MATERIALS FOR ELECTROCHEMICAL COMPONENTS AND LAYERS AND ELECTROCHEMICAL COMPONENTS PRODUCED WITH SAID MATERIALS

MATIERES PATEUSES COMPORTANT DES MATERIAUX NANOCRISTALLINS, DESTINEE A DES COMPOSANTS ELECTROCHIMIQUES, ET COUCHES ET COMPOSANTS ELECTROCHIMIQUES PRODUITS A PARTIR DESDITES MATIERES

(84) Benannte Vertragsstaaten:
**AT BE CH CY DE DK ES FI FR GB GR IE IT LI LU MC NL PT SE**

(30) Priorität: **19.04.1999 DE 19917581**
**08.10.1999 DE 19948548**

(43) Veröffentlichungstag der Anmeldung:
**10.04.2002 Patentblatt 2002/15**

(73) Patentinhaber: **Fraunhofer-Gesellschaft zur Förderung der angewandten Forschung e.V.**
**80686 München (DE)**

(72) Erfinder:
• **NEUMANN, Gerold**
**D-25469 Halstenbeck (DE)**
• **BIRKE, Peter**
**D-25524 Itzehoe (DE)**

(74) Vertreter: **Olgemöller, Luitgard Maria et al**
**Leonhard - Olgemöller - Fricke, Patentanwälte,**
**Postfach 10 09 62**
**80083 München (DE)**

(56) Entgegenhaltungen:
WO-A-97/38458          WO-A-98/23796
WO-A-99/04441          DE-A- 19 839 217
US-A- 5 470 910        US-A- 5 569 561

• A. C. PIERRE: "TiO2-polymer nanocomposites by sol-gel" ACTIVE AND PASSIVE ELECTRONIC COMPONENTS, Bd. 18, Nr. 1, 1995, Seiten 31-37, XP000952136
• G. CAMPET ET AL: "PLR (plastic lithium rechargeable) batteries using nanoscale materials : a convenient source of electrical energy for the future" BULLETIN KOREAN CHEMICAL SOCIETY, Bd. 20, Nr. 8, 1999, Seiten 885-892, XP002149858
• G.X. WANG ET AL: "Nanocrystalline NiSi alloy as an anode material for lithium-ion batteries" JOURNALL OF ALLOYS AND COMPOUNDS, Bd. 306, 2000, Seiten 249-252, XP002149516
• K. ZAGHIB ET AL: "Electrochemical study of Li4Ti5O12 as negative electrode for Li-ion polymer rechargeable batteries" JOURNAL OF POWER SOURCES, Bd. 81-82, September 1999 (1999-09), Seiten 300-305, XP002149517

Bemerkungen:

Die Akte enthält technische Angaben, die nach dem Eingang der Anmeldung eingereicht wurden und die nicht in dieser Patentschrift enthalten sind.

Bemerkungen:

Die Akte enthält technische Angaben, die nach dem Eingang der Anmeldung eingereicht wurden und die nicht in dieser Patentschrift enthalten sind.

**Beschreibung**

Die vorliegende Erfindung betrifft neuartige Materialien mit elektrochemischen Eigenschaften, und zwar insbesondere pastöse Massen, aus diesen Massen herstellbare selbsttragende oder auf einem Substrat aufliegende Schichten und daraus hergestellte Schichtverbünde, die als Batterien, Akkumulatoren, Kondensatoren (Supercaps), Solarzellen, elektrochrome Anzeigeelerriente oder dergleichen verwendbar sind. Insbesondere betrifft die Erfindung wiederaufladbare elektrochemische Zellen auf Festkörperbasis.

Seit Beginn der siebziger Jahre hat man versucht, elektrochemische Bauelemente wie Akkumulatoren oder dergleichen in Form dünner Schichten zu erzeugen. Das Ziel ist es, Folienverbünde zu erhalten, die einerseits so flexibel sind, daß man sie beispielsweise aufrollen oder einer anderen gewünschten Form anpassen kann, und die andererseits durch eine extrem hohe Kontaktfläche zwischen den einzelnen elektrochemischen Bestandteilen wie Elektroden und Elektrolyten, bezogen auf das eingesetzte Volumen an elektrochemisch aktivem Material, besonders günstige Lade- und Entladeeigenschaften aufweisen.

Um derartige Elektrodenmaterialien herzustellen, ist man bisher von festem oder zähflüssigem Teflon ausgegangen, welches mit einem gewissen Prozentsatz Kohlenstoff und dem eigentlichen Elektrodenmaterial gemischt und dann auf geeignete Ableitelektroden gepreßt oder aufgesprüht wurde. Dabei entstehen jedoch Schichten ungenügender Flexibilität. Des weiteren wurde vorgeschlagen, Elektrodenschichten herzustellen, die mit PVC und Tetrahydrofuran oder einem anderen in einem Lösungsmittel gelösten Polymer hergestellt wurden, aus dem das Lösungsmittel anschließend ausgetrieben wurde. Allerdings ist die Leitfähigkeit der hergestellten Produkte ungünstig.

Besondere Probleme bereitet die Herstellung einer Schicht, die in einem entsprechenden elektrochemischen Verbund als Elektrolyt fungieren kann. Die US 5 456 000 beschreibt wiederaufladbare Batteriezellen, die durch Laminierung von Elektroden- und Elektrolytzellen erzeugt werden. Als positive Elektrode wird ein Film oder eine Membran eingesetzt, die getrennt aus $LiMn_2O_4$-Pulver in einer Matrix-Lösung aus einem Copolymeren hergestellt und anschließend getrocknet wurde. Die negative Elektrode besteht aus einer getrockneten Beschichtung einer pulverisierten Kohlenstoff-Dispersion in einer Matrix-Lösung eines Copolymeren. Zwischen den Elektrodenschichten wird eine Elektrolyt/Separatormembran angeordnet. Hierfür wird ein Poly(vinylidenfluorid)-Hexafluorpropyfen-Copotymeres mit einem organischen Plastifizierer wie Propylencarbonat oder Ethylencarbonat umgesetzt. Aus diesen Bestandteilen wird ein Film erzeugt, und anschließend wird der Plastfizierer aus der Schicht herausgelöst In diesem "inaktiven" Zustand wird die Batteriezelle gehalten, bis sie ihrer Benutzung zugeführt werden soll. Um sie zu aktivieren, wird sie in eine geeignete Elektrolytlösung eingetaucht, wobei sich die durch das Austreiben des Plastifiziermittels gebildeten Kavitäten mit dem flüssigen Elektrolyten füllen. Anschließend ist die Batterie gebrauchsfertig.

Nachteilig an einem derartigen Konstrukt ist es, daß die Batterie nicht länger in aufgeladenem Zustand aufbewahrt werden kann, da an den Grenzflächen Korrosion auftritt (siehe mündliche Mitteilung A. Blyr et al., 4th Euroconference on Solid State Ionics, Connemara, Irland, September 1997, zur Veröffentlichung vorgesehen). Der Einsatz eines Flüssigelektrolyten bringt also Stabilitätsprobleme an den Phasengrenzen im Schichtverbund mit sich. Ein weiterer Nachteil ist es, daß die entsprechende Batterie in einer auslaufsicheren Gehäusung angeordnet werden muß.

Es ist auch bereits versucht worden, Elektrolyte in fester Form zu verwenden. Hierfür wurde vorgeschlagen, ionenleitende organische polymere Materialien (sog. echte Polymerelektrolyte) zu verwenden. So beschreibt das US Patent 5 009 970 den Einsatz eines gelförmigen Produktes, das durch Umsetzung eines festen Polyethylenoxid-Polymers mit Lithiumperchlorat und anschließendes Bestrahlen erfialten wurde. Das US Patent 5 041 346 beschreibt eine oxymethylenvemetzte Variante dieser Polymerelektrolyten, in der zusätzlich ein Weichmacher enthalten ist, der vorzugsweise ionensolvatisierende Eiganschaften aufweist, z. B. ein dipolares aprotisches Solvens wie g-Butyrotacton sein kann. Allerdings ist berichtet worden, daß die Ionenleitfähigkeit im Vergleich zu reinem festen Lithiumsalz zwar drastisch erhöht ist, für den Einsatz als Elektrolytschicht in elektrochemischen Bauelementen jedoch nicht ausreicht.

Ein weiterer Versuch betraf ähnliche Polymerelektrolyte. Hierfür wurden Poly(vinylfluorid)-Polymere und verwandte Fluorkohlenstoff-Copolymeren mit Triflurethylen oder Tetrafluorethylen eingesetzt. In diese Polymere wurden Lithiumsalze und zusätzlich organische Solventien eingearbeitet, die sowohl mit den Polymeren als auch mit den Salz-Bestandteilen kompatibel waren (Tsuchida et al., Elektrochimica Acta, Band 28 (1983, Seiten 591 ff und Seiten 833 ff)). Allerdings erhielt man hierbei eine brauchbare Ionenleitfähigkeit von mehr als etwa $10^{-5}$ S/cm nur bei erhöhten Temperaturen, da, wie die Autoren selbst berichten, diese Mischung nicht homogen blieb, sondern Salz- und Polymerkristallite ausbildete. Forschungen in diese Richtung wurden daher später als nicht erfolgversprechend eingestuft (siehe US 5 456 000, Spalte 2, Zeilen 31 bis 33).

Die US 5,569,561 beschreibt eine Primär- oder Sekundärzelle, in der mindestens eine Eektrode elektrochemisch aktivierbares Material nanokristalliner Teilchengröße enthält. Insbesondere wird hierfür vorgeschlagen, Titandioxid einzusetzen. Als Bindemittel kann ein Ethylenpropylendien-Monomer dienen. Die US 5,470,910 beschreibt Kompositmaterialien insbesondere für optische Elemente, die Nanopartikel enthalten können. Die Nanopartikel entstehen durch Ausfällung in einem Sol, und dieses Sol wird mit einer polymerisierbaren oder thermisch oder photochemisch härtbaren Verbindung sowie einem Polymerisationsinitiator gemischt, möglicherweise noch hydrolysierbare Gruppen werden anorganisch vernetzt, und schließlich wird das Material thermisch oder photochemisch gehärtet. Dabei entstehen siliziumhaltige, anorganisch/organische Kompositmaterialien. Die WO97/38458 betrifft Verbundmaterialien für wiederaufladbare, hydridspeichernde, pastöse Anodenmaterialien. Die Pasten bestehen aus dem Hydrid-Speichermaterial, einem Bindemittel wie PTFE und einem leitfähigen Material. Die Hauptkomponente des Hydrid-Speichermaterials liegt dabei in der Regel in nanokristalliner Form vor. Aus der WO98/23796 ist ein Verfahren zur Herstellung von fullerenartigen Metallchalcogeniden bekannt, mit denen Interkalation mit verschiedenen Metallen möglich ist. Da solche Strukturen stabile Suspensionen bilden, können dünne Filme abgeschieden werden, die sich unter anderem für die Herstellung von Solarzellen, Sekundärbatterien und elektrochromen Vorrichtungen eignen. Die Interkalations-Batterien können Elektrodenmaterial mit Partikeln im Nanobereich aufweisen. Auch die WO99/04441 betrifft als Elektrodenmaterialien verwendbare elektrochemisch aktivierbare Materialien in nanokristalliner Form zusammen mit einem polymeren Bindemittel. Aus dem Artikel von A.C. Pierre et al. in Active an Passive Electronic Comp., Band 18 (1), 1995, 31 bis 37 ist ein Hybridmaterial aus Titandioxid und Polyethylenoxid bekannt, das zur Aufnahme von Lithiumionen fähig ist und nanokristallines Material aufweist.

In der am 28. August 1998 hinterlegten deutschen Patentanmeldung 198 39 217.6 werden pastöse Massen offenbart, die sich für elektrochemische Bauelemente der eingangs erwähnten Art eignen. Die Massen umfassen eine heterogene Mischung aus (A) einer mindestens ein organisches Polymer, dessen Vorstufen oder dessen Präpolymere enthaltenden oder hieraus bestehenden Matrix und (B) einem elektrochemisch aktivierbaren, in der Matrix nicht löslichen, anorganischen Material in Form einer Festsubstanz, wobei entweder (a) die Masse aus mindestens etwa 60 Vol.-% (B) besteht und, sofern (B) ein Elektrodenmaterial ist, (B) ohne Zuhilfenahme eines Lösungs- oder Quellmittels für das organische Polymer, dessen Vorstufen oder dessen Präpolymere in die Matrix (A) eingearbeitet wurde, oder (b) die Masse aus mindestens etwa 60 Vol.-% (B) besteht und, sofern (B) ein Elektrodenmaterial ist, herstellbar ist, indem (B) in eine Matrix (A) eingearbeitet wurde, die weiterhin einen Plastifizierer für das organische Polymer enthält, und dieser Plastifizierer anschließend durch ein geeignetes Lösungsmittel entfernt wurde, und/oder (c) die Mischung zusätzlich (C) einen festen, von (B) verschiedenen Ionen- Elektronen und/oder gemischten Leiter enthält, der zumindest an den Korngrenzen zwischen (A) und (B) als dünne Schicht vorhanden ist. Aus diesen Massen lassen sich selbsttragende oder auf einem Substrat aufliegende Schichten herstellen. Aus einer geeigneten Abfolge dieser Schichten oder mindestens einer solchen Schicht in Verbindung mit anderen geeigneten Schichten lassen sich Schichtverbünde mit elektrochemischen Eigenschaften bzw. elektrochemische Zellen herstellen.

Aufgabe der vorliegenden Erfindung ist die Bereitstellung von Massen für die Herstellung elektrochemischer Bauelemente in Form von dünnen Schichtverbünden, die die genannten nachteiligen Eigenschaften nicht aufweisen. Insbesondere sollen die erfindungsgemäßen Massen bei der Verarbeitung zu Schichten bzw. Schichtverbünden mit elektrochemischen Eigenschaften Produkte wie wiederaufladbare Batterien (Akkumulatoren), elektrochrome Bauelemente oder dergleichen liefern, die eine hohe Flexibilität und sehr gute Elektronen- und Ionenleitungseigenschaften aufweisen und die darüber hinaus nicht auslaufen können und daher nicht notwendigerweise in Gehäusen, insbesondere in dichtenden Gehäusen, angeordnet werden müssen.

Erfindungsgemäß werden pastöse Massen zur Herstellung von in elektronischen Bauelementen verwendbaren, Festelektrolytschichten bereitgestellt, die (A) 0-70 Gew.-% einer mindestens ein organisches Polymer, dessen Vorstufen oder dessen Präpolymere enthaltenden oder hieraus bestehenden Matrix und (B) 30-100 Gew.-% eines als Festkörperelektrolyt oder ionischer Zwischenleiter geeignete, in der Matrix nicht löslichen, anorganischen Materials in Form einer Festsubstanz enthalten. Zumindest dann, wenn die Komponente (A) nicht vorhanden ist, enthält die erfindungsgemäße Masse weiterhin ein Suspensionsmittel.

Der Ausdruck "in elektrochemischen Bauelementen verwendbar" impliziert dabei, daß das elektrochemisch aktivierbare anorganische Material in Form einer Festsubstanz ein ionenleitendes, ggf. auch elektronenleitendes Material sein muß, das sich als Festelektrolyt eignet.

Damit zwischen den einzelnen Körnern der in die Matrix (A) eingebetteten elektrochemisch aktivierbaren Festsubstanz (B) ein verbesserter elektrischer Kontakt gewährleistet ist, ist erfindungsgemäß eine weitere Bedingung zu erfüllen. Es hat sich nämlich gezeigt, daß die im Stand der Technik beschriebenen schlechten Leitfähigkeiten überwunden werden können, wenn bestimmte Kriterien eingehalten werden. Beispiele hierfür nennt die DE 98 39 217.6. Erfindungsgemäß wurde nun festgestellt, daß die Eigenschaften derartiger Massen bzw. der daraus hergestellten elektrochemischen Bauelemente weiter verbessert werden können, wenn das elektrochemisch aktivierbare, in der Matrix nicht lösliche, anorganische Material (B) zumindest teilweise in Form eines nanokristallinen Pulvers vorliegt. Unter nanokristallinen Materialien sollen dabei Materialien verstanden werden, deren Korngrößen unterhalb von 10 $\mu$m, bevorzugt im Bereich von 1 $\mu$m, stärker bevorzugt im Bereich von 1-100 nm liegen. Man kann diese Pulver auch als röntgenamorphe Materialien bezeichnen.

Auf die Vorteile des Einsatzes von nanokristallinem Titandioxid in einer Elektrode ist bereits im US-Patent 55 69 561 hingewiesen worden. In diesem Patent ist die Erhöhung der Kapazität sowie die Schnelladefähigkeit von primären und sekundären Lithiumsystemen als Folge der Sinterung von nanokristallinem Elektrodenmaterial, das in einer kolloidalen Suspension als Precursor vorliegt, beschrieben. Diese Elektrode ist für ein System mit flüssigkeitsbasiertem Elektrolyten vorgesehen. In einer anderen Veröffentlichung (Joumal of Physical Chemistry, Vol. 102, 22, 1998) ist der Einsatz von nanokristallinem Kohlenstoff in der negativen Elektrode in seinen Vorteilen beschrieben worden.

Besonders bevorzugt werden die vorliegenden pastösen Massen mit nanokristallinem Festelektrolyten hergestellt und als Festkörperionenleiter in elektrochemischen Schichtsystemen der eingangs erwähnten Art verwendet, wobei als positive und/oder negative Elektrode ebenfalls Schichten dienen können, deren elektrochemisch aktivierbares Material zumindest teilweise aus nanokristallinem Pulver besteht

Die grundsätzlichen Vorteile von Festelektrolytsystemen sowie deren vorteilhafte Verarbeitung in Lithiumzellen sind in der genannten DE 198 39 217.6 beschrieben und werden vorliegend weiter unten ausführlicher erläutert.

In der bereits erwähnten DE 198 39 217.6 wird eine Ausgestaltung beschrieben, in der der Leitungsmechanismus der Lithiumionen in den Elektrolytmaterialien auf der Verwendung zweier verschiedener Elektrolyte basiert, von denen der eine in einem Lösemittel löslich, der andere aber unlöslich ist. Nach dem Austrocknen des Lösemittels übemehmen die Körner des unlöslichen Elektrolyten die Bulkleitfähigkeit der Lithiumionen, während der lösliche Elektrolyt durch die Abscheidung an allen Korngrenzen die Leitung über die Komgrenzen hinweg übernimmt. Die Bewegung der Lithiumionen erfolgt über Platzwechselvorgänge im Gitter der beiden Elektrolytkomponenten.

Erfindungsgemäß ist nun festgestellt worden, daß die erstrebte Leitfähigkeit statt dessen auch dadurch zu erreichen und noch weiter zu verbessern ist, daß das Material (B) (also der Elektrolyt) zumindest teilweise in Form eines nanokristallinen Pulvers vorliegt Eine bevorzugte Ausgestaltung der Erfindung betrifft daher Massen und Schichten, die Elektrolytmaterialien enthalten.

Der Einsatz nanokristalliner Materialien, die sich als Festelektrolyte eignen, besitzt eine Reihe von Vorteilen. So ist festzuhalien, daß die ionische Leitfähigkeit von Festelektrolyten über Platzwechselvorgänge im Gitter erfolgt Die Anzahl der vorhandenen Gitterplätze im thermodynamischen Gleichgewicht bestimmt somit entscheidend den Diffusionskoeffiizienten. Je höher die Zahl der unbesetzten Gitterplätze ist, desto höher ist der Diffusionskoeffizient und desto geringer ist der ionische Widerstand des Elektrolyten. Die Schaffung zusätzlicher innerer Oberflächen in der Elektrolytschicht über nanokristalline Körner erhöht die Anzahl der Fehlstellen zur Verbesserung der ionischen Leitfähigkeit über die im Festkörper vorliegende Konzentration hinaus. Eine Oberfläche enthält von sich aus eine gegenüber dem Innern eines Festkörpers hinaus erhöhte Konzentration von Fehlstellen. Dies äußert sich in dem in der einschlägigen Fachliteratur bekannten Effekt, daß die Oberflächendiffusion um mehrere Größenordnungen schneller verläuft als die Festkörperdiffusion. Die Erfindung bewirkt also unter anderem, daß die lonenbeweglichkeit aufgrund der Schaffung großer innerer Oberflächen infolge des Fehlstellendiffusionsmechanismus sehr hoch ist

Eine geeignete Volumenmischug aus nanokristallinem Elektrolytmaterial mit normalkristallinem Material führt zu einer optimierten Verteilung im Bezug auf die Volumenfüllung mit Vorteilen für die volumetrische Energiedichte sowie einer optimalen Ausgestaltung von Elektronen- und Ionenleitungspfaden. So ist es in den meisten Fällen wünschenswert, daß mindestens 30 Gew.-% des elektrochemisch aktivierbaren Materials (B) in nanokristalliner Form vorliegt. Bevorzugt beträgt dieser Anteil mindestens 50 Gew.-%. In manchen Ausgestaltungen kann dieser Anteil noch höher liegen, z.B. bei 70 Gew.-% und mehr.

Überraschenderweise hat sich weiterhin herausgestellt, daß der Einsatz nanokristalliner Materialien wie vorstehend beschrieben die Einarbeitung der übrigen Bestandteile in die pastöse Masse unkritisch macht. So konnte festgestellt werden, daß das nanokristalline Material aufgrund starker Kohäsions- bzw. Adhäsionseigenschaften den pastösen Massen ein hohes Maß an Geschmeidigkeit und Bindefähigkeit verleiht. Dies hat zur Folge, daß je nach vorgesehenem Anteil an nanokristallinem Material der Anteil an der Matrix (A), die mindestens ein organisches Polymer, dessen Vorstufen oder dessen Präpolymere enthält oder daraus besteht, in nur sehr kleinen Mengen eingearbeitet sein muß. Im Extremfall, z.B. dann, wenn das elektrochemisch aktivierbare Material (B) zum größten Teil oder sogar ganz aus nanokristallinem Pulver besteht (was in manchem Fällen vorteilhaft sein kann), kann der Anteil der Matrix (A) an der Summe von (A) + (B) auf unter 10 Vol.-%, bevorzugt auf unter 5 Vol-%, stärker bevorzugt unter 2 Vol.-% sinken. Daraus resultiert eine Erhöhung der Energiedichte. Im Extremfall kann auf die Matrix (A) völlig verzichtet werden, ohne daß die Masse ihre pastöse Konsistenz verliert bzw. daß nennenswerte Einbußen der mechanischen Flexibilität der daraus hergestellten Elektroden- bzw. Elektrolytschichten ("Tapes") auftreten. Ein Beispiel ist die nachgewiesene Klebwirkung von $Li_{0,5}Si_{0,5}P_{0,5}O_4$. Insbesondere bei Elektrolyten kann dieser Effekt über glasartige Ausgangssubstanzen erreicht werden, die nach der Zerkleinerung etwa in einer geeigneten Pulvermühle auf Partikelgrößen deutlich unter $1 \mu m$ eine enorme Klebwirkung aufweisen.

In den übrigen Fällen wird empfohlen, daß der Anteil an Matrix (A) nicht mehr als 50 Vol.-%, bevorzugt nicht mehr als 35 Vol.-%, stärker bevorzugt nicht mehr als etwa 30 Vol-% und besonders bevorzugt nicht mehr als etwa 20 Vol.-% beträgt.

Weiterhin ist anzumerken, daß die Komponente (B) nicht ausschließlich aus dem nanokristallinen Material bestehen muß, wie bereits vorstehend erwähnt wurde. Auch kann das nanokristalline Material sich chemisch von der nicht nanokristallin vorliegenden Komponente (B) unterscheiden, muß es aber nicht.

Nanopartikelgroße Körner lassen sich durch Fällungsreaktionen wie Co-Präzipitation herstellen. Ein Verfahren zur Herstellung von Gemischen elektrochemisch aktiver Schichten unter Einbeziehung normalkristalliner und nanokristalliner Materialien besteht darin, das Standardelektrodenmaterial mit einer Fällungsflüssigkeit zu vermengen. Nach Durchführung der Fällungsreaktion und Ausfiltern bzw. Sedimentation des Feststoffes aus der Flüssigkeit entsteht ein Gemenge aus nanokristallinem Material und Standardmaterial. Dieses Gemenge ist auch deshalb besonders vorteilhaft, weil das nanokristalline Material die Hohlräume zwischen dem normalkristallinen Material füllt und somit die Dichte und damit den Zusammenhalt der Schicht und die entsprechenden elektrochemischen Eigenschaften erhöht

Eine weitere Verbesserung des elektrischen Kontaktes zwischen den Körnern der Festsubstanz (B) kann gegebenenfalls zusätzlich auch dadurch erreicht werden, daß ein weiterer Ionen- und/oder Elektronenleiter (oder ein homogener, gemischter Leiter, je nach benötigter Art der Leitfähigkeit) (C) eingesetzt wird, der im Lösungs-/Quellmittel oder Plastfizierer für die Matrix (A) löslich ist und sich bei der Herstellung der Paste durch Abdampfen oder Austreiben des Lösungs-/Quellmittels oder durch Herauslösen des Plastfizierers zumindest an den Komgrenzen zwischen (A) und (B) als dünne Schicht absetzt.

Außer in dem bereits erwähnten Fall, daß die pastöse Masse 100% nanokristalline Festsubstanz (B) enthält, erhält sie ihre pastöse Konsistenz durch die Verwendung einer geeigneten Matrix (A). Der Ausdruck "pastös" soll dabei bedeuten, daß die Masse nach ihrer Herstellung mit Hilfe von gängigen Pastenauftragsverfahren verarbeitbar ist, beispielsweise aufgestrichen, aufgespachtelt, aufgerakelt oder mit diversen Druckverfahren auf einem Untergrund aufgebracht werden kann. Je nach Bedarf kann sie dabei relativ dünnflüssig bis sehr zäh gehalten werden.

Für die Matrix (A) kann eine Vielzahl von Materialien verwendet werden. Dabei kann man mit lösungsmittelfreien oder lösungsmittelhalfigen Systemen arbeiten. Als lösungsmittelfreie Systeme eignen sich beispielsweise vemetzbare, flüssige oder pastöse Harzsysteme. Beispiele hierfür sind Harze aus vernetzbaren Additionspolymeren oder Kondensationsharzen. So können beispielsweise Vorkondensate von Phenoplasten (Novolake) oder Aminoplasten eingesetzt werden, die nach Ausformen der pastösen Masse zur Schicht eines elektrochemischen Schichtverbundes endvemetzt werden. Weitere Beispiele sind ungesättigte, beispielsweise durch Pfropf-Copolymerisation mit Styrol vemetzbare Polyester, durch bifunktionelle Reaktionspartner härtbare Epoxiharze (Beispiel: Bisphenol-A-Epoxiharz, kalt gehärtet mit Polyamid), vemetzbare Polycarbonate wie durch ein Polyol vemetzbares Polyisocyanurat, oder binäres Polymethylmethacrylat, das ebenfalls mit Styrol polymerisiert werden kann. Die pastöse Masse wird dabei jeweils aus dem mehr oder weniger zähflüssigen Vorkondensat bzw. unvemetzten Polymer als Matrix (A) oder unter Verwendung wesentlicher Bestandteile davon, zusammen mit der Komponente (B), gebildet.

Eine andere Möglichkeit ist die Verwendung von Polymeren oder Polymer-Vorstufen zusammen mit einem Lösungs- oder Quellmittel für das organische Polymer. Im Prinzip besteht hier keine Beschränkung bezüglich der einsetzbaren synthetischen oder natürlichen Polymere. Nicht nur Polymere mit Kohlenstoff-Hauptkette sind möglich, sondern auch Polymere mit Heteroionen in der Hauptkette wie Polyamide, Polyester, Proteine oder Polysaccharide. Die Polymere können Homo- oder Copolymere sein; die Copolymere können statistische Copolymere, Pfropfcopolymere, Blockcopolymere oder Polyblends sein; eine Beschränkung ist hier nicht gegeben. Als Polymere mit reiner Kohlenstoff-Hauptkette sind beispielsweise natürliche oder synthetische Kautschuke verwendbar. Besonders bevorzugt sind fluorierte Kohlenwasserstoff-Polymere wie Teflon, Polyvinylidenfluorid (auf PVDF) oder Polyvinylchlorid, da hiermit bei den aus der pastösen Masse gebildeten Folien oder Schichten besonders gute wasserabweisende Eigenschaften erzielt werde können. Dies verleiht den damit erzeugten elektrochemischen Bauelementen eine besonders gute Langzeitstabilität. Weitere Beispiele sind Polystyrol oder Polyurethan. Als Beispiele für Copolymere seien Copolymere von Teflon und amorphem Fluorpolymer sowie Polyvinylidenfluorid/Hexafluorpropylen (im Handel als Kynarflex erhältlich) genannt. Als Beispiele für Polymere mit Heteroatomen in der Hauptkette seien Polyamide vom Diamin-Dicarbonsäure-Typ oder vom Aminosäure-Typ, Polycarbonate, Polyacetale, Polyether und Acrylharze genannt. Weitere Materialien umfassen natürliche und synthetische Polysacharide (Homo- und Heteroglykane), Proteoglykane, beispielsweise Stärke, Cellulose, Methylcellulose. Auch Substanzen wie Chondroitinsulfat, Hyaluronsäure, Chitin, natürliche oder synthetische Wachse und viele andere Substanzen können eingesetzt werden. Zusätzlich können auch die vorgenannten Harze (Präkondensate) in Lösungs- bzw. Verdünnungsmitteln verwendet werden.

Lösungs- bzw. Quellmittel für die vorgenannten Polymere sind dem Fachmann bekannt.

Unabhängig davon, ob die Matrix (A) ein Lösungs- oder Quellmittel enthält oder nicht, kann ein Plastifiziermittel (auch Weichmacher) für das bzw. die eingesetzten Polymere vorhanden sein. Unter "Plastifizierer" oder "Weichmacher" sollen hier Substanzen verstanden werden, deren Moleküle durch Nebenvalenzen (Van-der Waals-Kräfte) an die Kunststoffmoleküle gebunden werden. Sie verringem dadurch die Wechselwirkungskräfte zwischen den Makromolekülen und setzen damit die Erweichungstemperatur und die Sprödigkeit und Härte der Kunststoffe herab. Dies unterscheidet sie von Quell- und Lösungsmitteln. Aufgrund ihrer höheren Flüchtigkeit lassen sie sich üblicherweise auch nicht durch Abdampfen aus dem Kunststoff entfernen, sondern müssen ggf. durch ein entsprechendes Lösungsmittel herausgelöst werden. Das Einarbeiten eines Plastfizierers bewirkt eine hohe mechanische Flexibilität der aus der pastösen Masse erzeugbaren Schicht.

Der Fachmann kennt geeignete Weichmacher für die jeweiligen Kunststoffgruppen. Sie müssen mit dem Kunststoff, in den sie eingearbeitet werden sollen, gut verträglich sein. Gängige Weichmacher sind hochsiedende Ester der Phthalsäure oder der Phosphorsäure, beispielsweise Dibutylphthalat oder Dioctyphthalat. Weiterhin eignen sich beispielsweise Ethylencarbonat, Propylencarbonat, Dimethoxyethan, Dimethylcarbonat, Diethylcarbonat, Butyrolacton, Ethylmethylsulfon, Polyethylenglykol, Tetraglyme, 1,3-Dioxolan oder S,S-Dialkyldithiocarbonat.

Wird als Matrix eine Kombination aus Kunststoff und Plastifizierer verwendet, so kann der Plastifizierer anschließend mit einem geeigneten Lösungsmittel wieder aus der pastösen Masse herausgelöst werden. Die dabei entstehenden Kavitäten werden beim anschließenden Überführen der Masse in eine elektrochemisch aktive oder aktivierbare Schicht durch dabei erfolgende Press- und Laminationsvorgänge zum Zusammenfügen der verschiedenen Schichten geschlossen. Hierdurch wird die elektrochemische Stabilität des geladenen Akkumulators verbessert. Erstrebenswert ist bei Einsatz eines Festelektrolyten in der beschriebenen Kunststoffmatrix eine ionische Leitfähigkeit von mindestens $10^{-4}$S cm$^{-1}$.

Anstelle des späteren Verpressens der Kavitäten können diese auch nach dem Herauslösen des Plastifizierers mit einem zweiten festen Elektrolyt material aufgefüllt werden.

Zur Herstellung der Paste können die beschriebenen Polymere oder Polymervorstufen zusammen mit dem Lösungs- oder Quellmittel, dem nicht nanokristallinen Anteil an Komponente (B) und dem nanokristallinen Pulver zusammengegeben und in geeigneter Weise innig vermischt werden. Wenn das Lösungs- oder Quellmittel anschließend wieder entfernt wird, kann sich nunmehr die nanokristalline Komponente und der Komoberfläche des nicht nanokristallinen Elektrolyten absetzen und so den Kontakt zwischen den Körnern des nicht nanokristallinen Elektrolyten entscheidend verbessern. Der besondere Vorteil gegenüber der in der DE 198 39 217.6 beschriebenen Variante ergibt sich nun daraus, daß der nanokristalline Elektrolyt im Lösemittel zum Ansetzen der Paste nicht mehr löslich sein muß. Damit können nanokristalline, unlösliche Festelektrolyten zum Einsatz kommen, wie sie bereits für den nichtkristallinen Elektrolyten gewählt werden können. Die Klasse der unlöslichen Festelektrolyte zeichnet sich dadurch aus, daß sie eine höhere Ionenleitfähigkeit aufweist als die Klasse der löslichen Elektrolyte. Damit führt der Einsatz unlöslicher, nanokristalliner Festelektrolyte zur Verbesserung des Komgrenzenkontaktes mittels eines sehr gut leitenden zweiten Festelektrolyten mit der Folge eines reduzierten ionischen Widerstandes des Elektrolyten, wie er in sehr vielen Anwendungen erwünscht ist.

Die vorliegenden, erfindungsgemäßen pastösen Massen und daraus hergestellten Schichten eignen sich, wie bereits erwähnt, für eine Vielzahl elektrochemischer Bauelemente, z.B. Akkumulatoren, Batterien, Supercaps oder elektrochrome Anzeigeelemente. Der Fachmann kann hierfür dieselben Festsubstanzen (B) auswählen, die er für klassische elektrochemische Bauelemente, d.h. solche ohne den Zusatz von Kunststoffen, verwenden würde.

Beispielhaft seien nachstehend mögliche Festsubstanzen (B) für einen Akkumulator in Lithiumtechnologie genannt:

- untere Ableitelektrode Al, Cu, Pt, Au, C
- positive Elektrode LiF, Li$_x$NiVO$_4$, Li$_x$[Mn]$_2$O$_4$, LiCoO$_2$,
  LiNiO$_2$, LiNi$_{0,5}$Co$_{0,5}$O$_2$,
  LiNi$_{0,8}$Co$_{0,2}$O$_2$, V$_2$O$_5$, Li$_x$V$_6$O$_{13}$
- Elekrolyt (hier Festkörper) Li$_{1,3}$Al$_{0,3}$Ti$_{1,7}$(PO$_4$)$_3$,
  LiTaO$_3$·SrTiO$_3$, LiTi$_2$(PO$_4$)$_3$·xLi$_2$O,
  Li$_4$SiO$_4$·Li$_3$PO$_4$,
  LiX + ROH mit x=0-0,3 und X=Cl, Br, I (1, 2 oder 4 ROH pro LiX).
- Negative Elektrode Li, Li$_{4+x}$Ti$_5$O$_{12}$, Li$_x$MoO$_2$, Li$_x$WO$_2$,
  Li$_x$C$_{12}$, Li$_x$C$_6$, Lithiumlegierungen
- obere Ableitelektrode Al, Cu, Mo, W, Ti, V, Cr, Ni

Die vorliegende Erfindung ist aber selbstverständlich nicht auf Akkumulatoren in Lithiumtechnologie beschränkt, sondern umfaßt, wie bereits oben erwähnt, alle diejenigen Systeme, die sich auch "konventioneller" Technik, d. h. ohne Einarbeiten einer organischen Polymermatrix, herstellen lassen.

Der Einsatz nanokristalliner Materialien in Elektrolyten bietet somit insbesondere in einem Schichtverbund mit Akkumulatoreigenschaften die Option einer erheblich verbesserten Kinetik. Dies basiert darauf, daß die Kömchengröße die bestimmende Weglänge für die Diffusion ist, nicht die Schichtdicke. Dies wirkt sich in vorteilhafter Weise auf eine Reduktion des Innenwiderstandes aus, was wiederum z.B. die Schnellade- und Entladefähigkeit erlaubt Die Verarbeitung von Festelektrolyten und Elektrodenmaterialien, wie sie in Lithiumsystemen zum Einsatz kommen, in zumindest teilweise nanokristalliner Form zieht somit signifikant verbesserte elektrische Eigenschaften nach sich. So verbessert der Kömchenkontakt die elektronischen Eigenschaften.

Nachstehend sollen einige spezielle Ausgestaltungen der pastösen Massen beschrieben werden, die sich für spezielle Bauelemente oder Bauelement-Bestandteile eignen. Soweit die darin eingesetzten elektrochemisch aktivierbaren Bestandteile noch nicht Stand der Technik sind, sollte klar sein, daß diese Substanzen auch in "Bulk-Form", d. h. ohne Polymermatrix bzw. ohne nanokristalline Bestandteile, in entsprechenden elektrochemischen Bauelementen eingesetzt werden können.

Überraschenderweise hat sich auch gezeigt, daß die Einarbeitung eines Phasengemischs in die erfindungsgemäße pastöse Masse, bestehend aus $Li_4SiO_4 \cdot Li_3PO_4$, zu einer Verbesserung der Plastizität der daraus erzeugten Festelekrolyte führt. Voraussetzung hierfür ist, daß das Phasengemisch äußerst fein gemahlen ist. Die extrem geringen Korngrößen dürften die Ursache für eine verbesserte innere Gleitwirkung sein.

Auch wenn die Festsubstanz (B) ein Elektrolytmaterial ist, kann sie aus einem Lithiumionenleiter und einem oder mehreren weiteren Ionenleitern (Li, Cu, Ag, Mg, F, Cl, H) bestehen. Hiermit hergestellte Elektrolyt-Schichten weisen besonders günstige elektrochemische Eigenschaften wie Kapazität, Energiedichte, mechanische und electrochemische Stabilitat auf.

Die vorstehend beschriebenen Bestandteile, aus denen die erfindungsgemäße pastöse Masse hergestellt wird, können auf konventionelle Art und Weise vermischt werden, vorzugsweise durch heftiges Rühren oder Verkneten der Bestandteile. Gegebenenfalls werden das organische Polymer oder seine Vorstufen im Lösungs- oder Quellmittel vorgelöst oder vorgequollen, bevor die Komponente (B) zugegeben wird. In einer besonderen Ausgestaltung der Erfindung wird die Masse während des Mischvorgangs oder im Anschluß daran einer Ultraschallbehandlung unterzogen. Hierdurch werden die Festsubstanz (B) und gegebenenfalls der Leiter (C) stärker verdichtet, weil die Komgrößen durch Aufbrechen der Körner herabgesetzt werden. Dies verbessert die elektrischen und elektrochemischen Eigenschaften der pastösen Massen. Man kann die für Elektrolyte vorgesehenen Materialien auch vor der Einarbeitung in die Masse einer solchen Ultraschallbehandlung unterziehen, um von vornherein die Komgrößen zu verringern. Durch das Einbetten der Festsubstanzen (B) in die Matrix (A) entfällt das Sintern der Pulver der elektrochemisch aktivierbaren Substanzen bei hohen Temperaturen, wie es für "konventionelle" elektrochemische Bauelemente üblich ist. Ein solches Sintern würde keine pastöse Konsistenz der Ausgangssubstanzen liefern.

Die erfindungsgemäßen pastösen Massen eignen sich insbesondere für das Erzeugen von Dünnflim-Batterien und anderen entsprechenden elektrochemischen Bauelementen wie z.B. elektrochromen Bauelementen. Bevorzugt handelt es sich um Bauelemente in der sogenannten "Dickschicht-Technologie". Die einzelnen Schichten dieser Elemente werden auch "Tapes" genannt. Hierfür werden einzelne elektrochemisch aktive bzw. aktivierbare Schichten in einer Dicke von etwa 10 μm bis etwa 1 bis 2 mm erzeugt, aufeinander aufgelegt und in innigen Kontakt gebracht. Der Fachmann wird die der Anwendung gemäße Dicke jeweils entsprechend auswählen. Bevorzugt sind Bereiche von etwa 50 μm bis 500 μm, ganz besonders bevorzugt ein Bereich von etwa 100 μm. Es ist erfindungsgemäß allerdings auch möglich, entsprechende Dünnschicht-Bauelemente herzustellen (dieser Begriff umfaßt Dicken von vorzugsweise 100 nm bis zu einigen μm). Diese Anwendung dürfte aber beschränkt sein, da entsprechende Bauelemente den gängigen Kapazitätanforderungen in einer Vielzahl von Fällen nicht genügen dürften. Denkbar ist allerdings die Anwendung beispielsweise für Backup-Chips.

Die vorliegende Erfindung umfaßt daher weiterhin selbsttragende oder auf einem Substrat aufliegende, elektrochemisch aktive bzw. aktivierbare Schichten, bevorzugt in den angegebenen Dicken, die aus den voranstehend beschriebenen pastösen Massen erzeugt werden können. Die Schichten sind vorzugsweise flexibel.

Zur Erzeugung sowohl der selbsttragenden Schichten (Folien, Tapes) auf der auf einem Substrat aufliegenden Schichten kann auf die üblichen, im Stand der Technik bekannten Verfahren zurückgegriffen werden, die für die entsprechenden Polymermaterialien der Matrix anwendbar sind. Die Verfestigung der pastösen Massen erfolgt dabei je nach Material beispielsweise durch Härten (von Harzen oder anderen Präkondensaten), durch Vernetzen von Präpolymerisaten oder linearen Polymerisaten, durch Abdampfen von Lösungsmittel oder auf ähnliche Art und Weise. Um selbsttragende Folien zu erhalten, kann beispielsweise eine geeignete pastöse Masse auf Kalandern in der geeigneten Dicke ausgeformt werden. Hier kann auf Standardtechnologie verwiesen werden. Selbsttragende Schichten können auch durch Auftragen der pastösen Masse auf ein Substrat und Abziehen der erzeugten Schicht nach ihrer Verfestigung gebildet werden. Voraussetzung ist dabei jeweils, daß das Produkt eine ausreichende Flexibilität besitzt. Die Beschichtung kann mit üblichen Pastenauftragsverfahren durchgeführt werden. Beispielhaft sei hier das Aufstreichen, Aufrakeln, Aufspritzen, Spincoating und dergleichen genannt. Auch Drucktechniken sind möglich.

In einer bevorzugten Ausgestaltung der Erfindung werden vemetzbare Harzmassen (Präkondensate), wie weiter oben für die pastösen Massen beschrieben, eingesetzt und nach Ausformen der Schicht durch UV- oder Elektronenbestrahlung ausgehärtet. Eine Härtung kann natürlich auch thermisch oder chemisch (beispielsweise durch Eintauchen der erzeugten Schicht in ein entsprechendes Bad) bewirkt werden.

Gegebenenfalls werden den Massen geeignete Initiatoren oder Beschleuniger oder dgl. für die jeweilige Vernetzung zugesetzt.

Die vorliegende Erfindung betrifft weiterhin Schichtverbünde mit elektrochemischen Eigenschaften, wie insbesondere Akkumulatoren und andere Batterien oder elektrochrome Bauelemente, die durch eine entsprechende Abfolge der obengenannten Schichten gebildet werden oder diese umfassen.

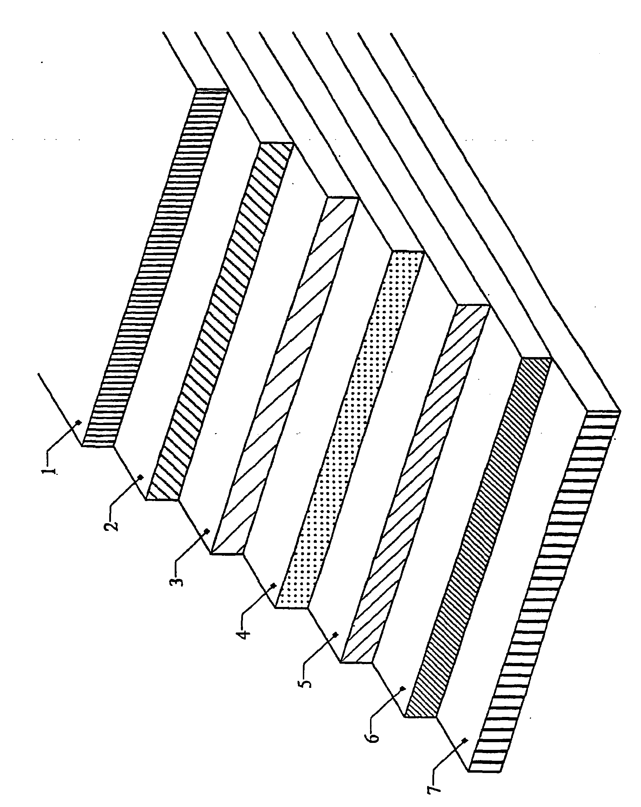

Figur 1 zeigt die Abfolge einer solchen Anordnung. Die Bezugsziffem bedeuten: Ableitelektrode 1, Zwischentape 2, Elektrode 3, Elektrolyt 4, Elektrode 5, Zwischentape 6 und Ableitelektrode 7. Näheres hierzu ist im nachfolgenden Text erläutert.

Für die Herstellung von Schichtverbünden können die einzelnen pastösen Massen Lage für Lage aufeinander mittels Pastenauftragsverfahren aufgebracht werden. Dabei kann entweder jede einzelne Lage für sich vernetzt oder von Lösungsmittel befreit oder auf sonstige Weise in die Schichtform gebracht werden; es kann aber auch eine Verfestigung der einzelnen Matrices durch Vernetzung oder Abdampfen des Lösungs- oder Quellmittels oder dergleichen nach Beendigung des Auftragens aller benötigten Schichten vorgenommen werden. Letzteres ist beispielsweise dann vorteilhaft, wenn die einzelnen elektrochemisch aktivierbaren Schichten mit einem Druckverfahren aufgetragen werden, das analog zu einem Vietfarbendruck erfolgt. Als Beispiel hierfür sei die Flexodruck-Technik erwähnt, mit deren Hilfe kontinuierlich mehrere Meter/Sekunde eines Substrats mit den erforderlichen elektrochemisch aktivierbaren Schichten bedruckt werden können.

Alternativ kann jede Schicht oder Folie einzeln in ihren endverfestigten Zustand überführt werden. Handelt es sich um selbsttragende Folien, so können die entsprechenden Bestandteile des zu bildenden Bauelementes anschließend durch Laminierung miteinander verbunden werden. Hierfür können konventionelle Larniniertechniken eingesetzt werden. Genannt sei hier beispielsweise das Extrusionsbeschichten, wobei die zweite Schicht durch Anpreßwalzen mit einer Trägerschicht verbunden wird, Kalanderbeschichten mit zwei oder drei Walzspalten, worin neben der pastösen Masse die Trägerbahn mit einläuft, oder Doublieren (Verbinden unter Druck und Gegendruck von bevorzugt erhitzten Walzen). Der Fachmann wird die entsprechenden Techniken ohne weiteres auffinden, die sich durch die Wahl der Matrices für die jeweiligen pastösen Massen ergeben oder anbieten.

Ein Preßvorgang während des Verbindens (Laminierens) der einzelnen Schichten kann häufig erwünscht sein, nicht nur zum besseren Verbinden (und damit dem Erzielen einer besseren Leitfähigkeit) der einzelnen Schichten, sondern beispielsweise auch, um möglicherweise vorhandene Kavitäten in den einzelnen Schichten zu beseitigen, die beispielsweise wie voranstehend beschrieben durch Auswaschen von Plastifizierer oder dergleichen erzeugt worden sind. Hierfür sind gängige Techniken anwendbar. Vorteilhaft kann eine Kaltverpressung (bei Temperaturen unter 60°C) erfolgen, sofern die eingesetzten Materialien dies erlauben. Ein besonders guter Kontakt der einzelnen Schichten untereinander wird dadurch gewährleistet.

Die elektrochemischen Bauteile, die mit den erfindungsgemäßen pastösen Massen herstellbar sind, sind nicht beschränkt. Die nachstehend beschriebenen Ausgestaltungen sind daher nur als Beispiele oder besonders bevorzugte Ausgestaltungen zu verstehen.

So können wiederaufladbare elektrochemische Zellen in Dickschichttechnologie hergestellt werden, d. h. mit einzelnen, elektrochemisch aktivierbaren Schichten in einer Dicke von etwa 10 $\mu$m bis etwa 1 bis 2 mm und bevorzugt von etwa 100 $\mu$m. Wenn die elektrochemische Zelle auf der Lithiumtechnologie basieren soll, bieten sich als Festsubstanzen für die jeweiligen Elektroden bzw. Elektrolytschichten diejenigen Substanzen an, die bereits voranstehend hierfür aufgezählt sind. Dabei sind mindestens drei Schichten vorzusehen, nämlich eine solche, die als positive Elektrode fungiert, eine, die als Festkörperelektrolyt fungiert, und eine, die als negative Elektrode fungiert, d.h. die Schichten 3, 4 und 5 der Figur 1.

Erfindungsgemäß hat sich herausgestellt, daß besonders vorteilhafte Stromdichten im Akkumulator erzielt werden, wenn gewisse Grenzbedingungen eingehalten werden. Die Stromdichte läßt sich bekanntlich durch den Widerstand des Elektrolyten einstellen. Ist sie zu hoch gewählt, so können die Elektroden durch Polarisation langfristig zerstört werden; ist sie zu niedrig, so ist die Leistung des hergestellten Akkumulators nur für wenige Einsatzgebiete ausreichend. Die genannte Grenzbedingung liegt vorzugsweise bei 1 mA/cm$^2$. Wenn beispielsweise ein Elektrolyt eine Leitfähigkeit von 10$^{-4}$ S/cm besitzt, so ist es besonders vorteilhaft, wenn die Elektrolytschicht etwa 100 $\mu$m dick ist. Eine Stromdichte von 1 mA/cm$^2$ ruft dann nämlich einen durch den Widerstand bedingten Spannungsabfall von vemachlässigbaren 0,1 V hervor. Wenn die Leitfähigkeit des Elektrolyten dagegen beispielsweise 10$^{-5}$ S/cm beträgt, kann die Dicke der Elektrolytschicht auf etwa 10 $\mu$m gesenkt werden. Es ist daher empfehlenswert, die Schichtdicke d im Verhältnis zur Leitfähigkeit $s_{ion}$ und einem ionischen Widerstand ($\Omega$) und in Bezug auf die Fläche A so zu wählen, daß die folgende Formel erfüllt wird:

$$200 \ \Omega < d/(s_{ion} \cdot A).$$

Die genannte dreischichtige Zelle (oder jedes beliebige andere elektrochemische Bauelement, bestehend aus positiver Elektrode/Elektrolyt/negativer Elektrode) kann zusätzlich mit Ableitelektroden (Schichten 1 und 7 der Figur 1) versehen sein. Diese bestehen zweckmäßigerweise aus Folien der geeigneten Materialien (Materialien für Ableitelektroden, die in der Lithiumtechnologie verwendet werden können, sind weiter vorne beschrieben).

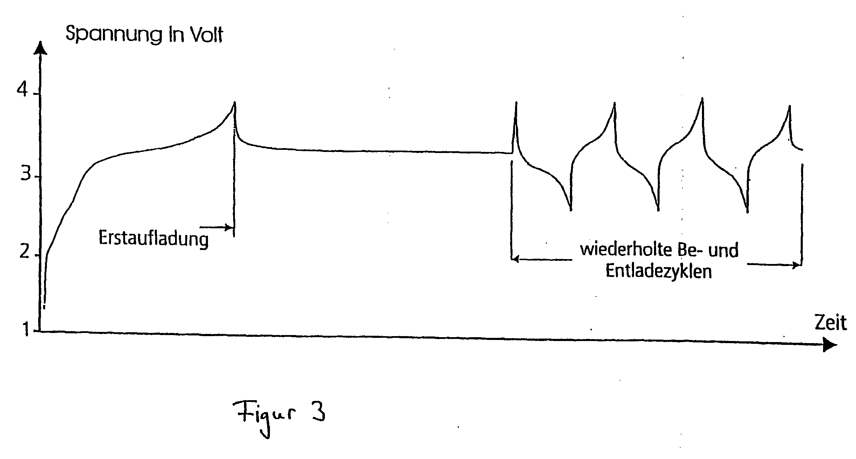

In einer speziellen Ausgestaltung der Erfindung wird zwischen die untere Ableitelektrode und die ihr benachbarte Elektrode sowie die obere Ableitelektrode und die ihr benachbarte Elektrode eine weitere dünne Kunststoffschicht ("Zwischentape", Schichten 2 und 6 der Figur 1) eingearbeitet, die ebenfalls mit Hilfe einer pastösen Masse der vorliegenden Erfindung hergestellt sein kann. Diese dünne Kunststoffschicht sollte leitende, metallische Elemente oder Legierungen aus solchen Elementen enthalten, die geeignet sind, Elektronen vom jeweiligen Elektrodenmaterial auf die jeweilige Ableitelektrode zu transportieren. Beispiele hierfür sind die Elemente Gold, Platin, Rhodium und Kohlenstoff oder Legierungen aus diesen Elementen, wenn die Kunststoffschicht zwischen positiver Elektrode und zugehöriger Ableitelektrode angeordnet werden soll. Wenn sie zwischen negativer Elektrode und Ableitelektrode angeordnet werden soll, sind als Elemente Nickel, Eisen, Chrom, Titan, Molybdän, Wolfram, Vanadium, Mangan, Niob, Tantal, Kobalt oder Kohlenstoff zu nennen. Für die Konzentration und den Aufbau der pastösen Massen, aus denen diese Schichten gebildet werden, gilt das voranstehend für die Elektroden und Elektrolyte Gesagte selbstverständlich ebenfalls. Eine Ausgestaltung mit Ableitel-ektroden und Zwischentapes (siehe auch Figur 1) besitzt, wenn sie z.B. in der erwähnten Lithiumtechnologie hergestellt ist, Lade- und Entladekurven, wie sie in Figur 3 dargestellt sind.

Die guten Haftungseigenschaften nanokristalliner Materialien an nahezu allen Oberflächen können alternativ dazu genutzt werden, den elektrischen Kontakt zwischen den Ableitelektroden mit dem jeweiligen Elektrodenmaterial auf einfache Weise entscheidend zu verbessern. Dadurch kann die Anordnung des zuvor beschriebenen Zwischentape in vorteilhafter Weise entfallen. Die Ableitelektroden werden in vielen Akkumulatorsystemen in Form von Netzelektroden etwa aus den Metallen Aluminium oder Kupfer realisiert. Deren Haftung an den Elektrodenmaterialien ist problematisch, deshalb sind umfangreiche Vorbehandlungen der Netze beschrieben worden, um deren Haftungsverhaiten zu verbessern. Das Einstäuben/Beschichten der Netzelektroden mit nanokristallinem Kohlenstoff kann diese aufwendigen Verfahren ersetzen, da der nanokristalline Kohlenstoff aufgrund seiner guten Haftwirkung gut an den Netzelektroden haftet und somit eine gute Ankontaktierung an das Elektrodenmaterial beim Laminationsprozeß der Ableitelektrode an das Elektrodenmaterial gewährleistet.

Die elektrochemischen Bauelemente der vorliegenden Erfindung können beispielsweise in einem kunststoffbasierten Gehäuse versiegelt werden. Gegenüber Metallgehäusen wird hier das Gewicht vorteilhaft verringert; Vorteile ergeben sich weiterhin für die Energiedichte.

Der elektrochemische Schichtverbund (das elektrochemische Bauelement) kann auch zwischen zwei oder mehr Folien aus einem mit Wachs oder Paraffin beschichteten Kunststoff eingebettet werden. Diese Materialien wirken als Versiegelung und können zusätzlich aufgrund ihrer inhärenten Eigenschaften mechanischen Druck auf den Schichtverbund ausüben, wodurch in vorteilhafter Weise eine Kontaktverbesserung im Schichtverbund durch Preßwirkung erzielt wird.

Wenn das elektrochemische Bauelement wie vorstehend oder auf andere Weise versiegelt wird, kann man das Innere mit einem vorgegebenen Wasser-/Sauerstoff-Partialdruck beaufschlagen, der eine hohe elektrochemische Stabilität bewirkt. Dies läßt sich beispielsweise durch das Versiegeln des elektrochemischen Elementes in einer solchen Umgebung mit entsprechend eingestellten und gewählten Parametern bewirken.

Wenn, was bei manchen Ausgestaltungen der Fall sein kann, im Verlauf des Fertigungsprozesses Feuchtigkeit in den Folienverbund gelangt ist, die langfristig unerwünschte Folgen hat, so kann der Verbund vor dem Versiegeln in einem Gehäuse oder dgl. unter Vakuum gebracht und dabei ggf. einer erhöhten Temperatur ausgesetzt werden, um die Feuchtigkeit wieder auszutreiben.

In einer anderen Ausgestaltung der vorliegenden Erfindung wird als Elektrolytschicht eine Schicht gewählt, die aus zwei miteinander laminierten Folien unterschiedlicher Zusammensetzung besteht, die jeweils an die Elektrode angepaßt sind, mit der sie Kontakt haben. Dies wirkt sich vorteilhaft auf die Stabilität der Phasengrenzen zwischen positiver Elektrode und Elektrolyt 1 sowie negativer Elektrode und Elektrolyt 2 aus. Als konkretes Beispiel für diese Ausgestaltung sei die Verwendung von Lithiumjodid als Elektrolytmaterial der ersten Schicht und $Li_{1,3}Al_{0,3}Ti_{1,7}(PO_4)_3$ als Elektrolytmaterial der zweiten Schicht aus.

Als Beispiel für eine galvanische Zelle mit elektrochromen Eigenschaften sei eine Schichtenfolge genannt, die aus der folgenden Sequenz besteht:

Leiter 1 /Y/MeX-Alkoholat/$WO_3$/Leiter 2.

In dieser Sequenz kann das Metall Me z.B. unter Lithium, Natrium, Kalium, Rubidium und Cäsium ausgewählt werden, dessen Anion X z.B. unter den Halogeniden Chlorid, Bromid und Jodid. Der Leiter 1 kann z.B. ausgewählt sein unter Indium-Zinn-Oxid (ITO), Zink-Aluminium-Oxid ($Zn_xAl_yO_z$) und Silber. Der Leiter 2 kann z.B. ausgewählt sein unter Indium-Zinn-Oxid (ITO) und Zink-Aluminium-Oxid ($Zn_xAl_yO_z$).

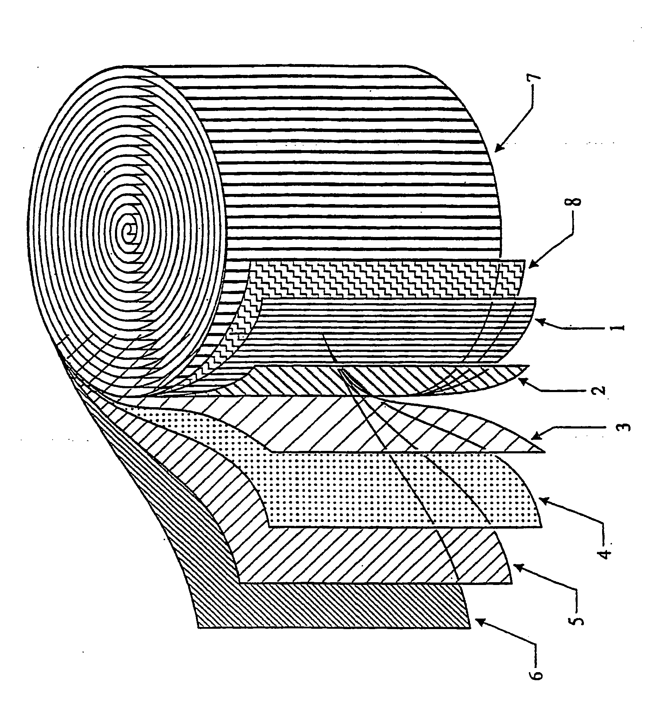

Die erfindungsgemäßen Schichtfolgen der elektrochemischen Bauelemente können in beliebiger Form angeordnet werden. Beispielsweise können die flexiblen Schichtverbünde aufgerollt werden, wodurch eine besonders vorteilhafte Geometrie für kompakte Akkumulatoren erzielt wird. Bei kleinem Bauvolumen des Akkumulators ist hier eine sehr große batterieaktive Fläche vorhanden. Figur 2 zeigt eine solche Ausgestaltung, wobei die Bezugszeichen 1 bis 7 die für Figur 1 genannten Bedeutungen besitzen und Bezugszeichen 8 eine Isolatorschicht bezeichnet.

Nicht-selbsttragende Schichtverbünde können auch auf festen Untergründen wie Wänden zur integrierten Energiespeicherung aufgetragen werden (selbsttragende Folienverbände können natürlich ebenfalls aufgebracht bzw. aufgeklebt werden). Hier können große Flächen ausgenutzt werden; ein eigener Raumbedarf für die Akkumulatoren ist nicht gegeben. Ein spezielles Beispiel für eine derartige Ausgestaltung ist die Integration von Schichtverbünden für Akkumulatoren in Substrate für Solarzellen. Hierdurch können autarke Energieversorgungseinheiten geschaffen werden. Schichtsequenzen für Akkumulatoren können auch auf feste oder flexible Substrate aufgebracht werden, um in elektronischen Aufbauten der integrierten Energiespeicherung zu dienen.

Nachstehend sollen konkrete Beispiele die Erfindung näher erläutem:

Beispiel 1

Herstellung eines Gemischs von normalkristallinem und nanokristallinern Material

LiCl, $TiCl_3$ sowie $AlCl_3$ werden in Wasser gelöst. Als Elektrolytmaterial mit Standardkorngröße wird $Li_{1,3}Al_{0,3}Ti_{1,7}(PO_4)_3$, das in Wasser nur schwer löslich ist, hinzugefügt und in der Flüssigkeit in Bewegung gehalten. Wird in diese Lösung nun $Na_3(PO_4)$ und Wasserstoffperoxid eingebracht, so kommt es nach längerem Rühren und/oder Temperaturerhöhung zur Oxidation des Titans in die Oxidationsstufe IV und zu einer Fällungsreaktion, bei der nanokristallines $Li_{1,3}Al_{0,3}Ti_{1,7}(PO_4)_3$ als schwerlösliche Komponente ausfällt Nach dem Filtern bzw. der Sedimentation entsteht so ein Gemenge aus normalkristallinem und nanokristallinem $Li_{1,3}Al_{0,3}Ti_{1,7}(PO_4)_3$, das dann auf verschiedene Weise als Ionenleiter weiterverarbeitet werden kann.

Beispiel 2

Herstellung eines Supercaps:

(a) 6g aktivierter Kohlenstoff, 1.2g Acetylenruß, 1.8g PVDF/HFP und 0.6g Ethylencarbonat werden in 60g Aceton angesetzt. Die Mischung wird unter Rühren auf 100°C erhitzt, anschließend auf 50°C abgekühlt und bei dieser Temperatur etwa 4 h lang gerührt. Danach wird sie vorsichtig eingeengt, bis sie die gewünschte Konsistenz erreicht hat. Aus dieser pastösen Masse wird in üblicher Weise eine Elektrodenfolie gezogen.

(b) 9g des Materials aus Beispiel 1, 0.9g Ethylencarbonat und 3.0g PVDF/HFP werden in 40g Aceton angesetzt. Die Mischung wird wie unter a) beschrieben behandelt. Aus der pastösen Masse wird eine Elektrolytfolie gezogen.

c) Zwei Kupferableitnetze werden mit je einer der gemäß a) hergestellten Elektrodenfolien laminiert. Die Elektrolytfolie gemäß b) wird zwischen die beiden Folien gelegt, und alle Schichten werden zu einem Supercap laminiert.

Beispiel 3

Transparente Folie für Anwendungszwecke als elektrochromes Anzeigeelement (z.B. Display).

6g nanokristallines $TiO_2$, 1.2g Acetylen, 1.8g PVDF/HFP und 0.6g Ethylencarbonat werden in 60g Aceton angesetzt. Die Mischung wird unter Rühren auf 100°C erhitzt, anschließend auf 50°C abgekühlt und bei dieser Temperatur etwa 4 h lang gerührt. Danach wird sie vorsichtig eingeengt, bis sie die gewünschte Konsistenz erreicht hat. Aus dieser pastösen Masse wird in üblicher Weise eine transparente Folie gezogen.

Beispiele 4 und 5

Beispiel 3 wurde mit der Maßgabe wiederholt, daß das Titandioxid durch die gleiche Menge nanokristallines $WO_3$ oder $MoO_3$ ersetzt wird. Die Eigenschaften der erhaltenen Folie sind vergleichbar.

Beispiel 6

Herstellung einer Lithiumzelle:

a) Eine als positive Elektrode dienende Folie wurde nach der Rezeptur des Beispiels 2a hergestellt, worin jedoch der aktivierte Kohlenstoff durch 6g nanokristallines $LiCoO_2$ ersetzt war.

b) Eine als negative Elektrode dienende Folie wurde nach derselben Rezeptur hergestellt, wobei der aktivierte Kohlenstoff jedoch gegen 6g nanokristallines SnO ausgetauscht war.

c) Eine Elektrolytfolie wurde in in Beispiel 2b beschrieben hergestellt.

d) Die drei Folien wurden miteinander laminiert. Man erhält eine Lithiumzelle, in der die positive Elektrode bei Einlagerung von Lithium eine Su-Li Legierung 0sowie $Li_2O$ bildet, wobei die Legierung selbst aufgrund der nanokristallinen Form des SnO in äußerst fein verteilter Form vorliegt.

Beispiel 7

Beispiel 6 wurde wiederholt, wobei jedoch anstelle von SnO Zinkoxid verwendet wird. Das Ergebnis ist vergleichbar.

**Patentansprüche**

1. Pastöse Massen zur Herstellung von in elektrochemischen Bauelementen verwendbaren Festelektrolytschichten, bestehend aus

   (A) 0-70 Gew.-% einer mindestens ein organisches Polymer, dessen Vorstufen oder dessen Präpolymere enthaltenden oder hieraus bestehenden Matrix und
   (B) 30-100 Gew.-% eines als Festkörperelektrolyt oder ionischer Zwischenleiter geeigneten, in der Matrix vorzugsweise nicht löslichen, anorganischen Materials in Form einer Festsubstanz, und zusätzlich ggf. einem Suspensionsmittel für (B),

   **dadurch gekennzeichnet, dass** mindestes 30 Gew.-% des als Festkörperelektrolyt oder ionischer Zwischenleiter geeigneten Materials in Form eines nanokristallinen Pulvers vorliegen.

2. Pastöse Masse nach Anspruch 1, **dadurch gekennzeichnet, dass** das nanokristalline Pulver mit dem übrigen als Festkörperelektrolyt oder ionischer Zwischenleiter geeigneten Material chemisch identisch oder von diesem chemisch verschieden ist.

3. Pastöse Masse nach Anspruch 1 oder 2, **dadurch gekennzeichnet, dass** die Menge an nanokristallinem Pulver mindestens 70 Gew.-%, stärker bevorzugt mindestens 85 Gew.-% und am meisten bevorzugt mindestens 90 Gew.-% des als Festkörperelektrolyt oder ionischer Zwischenleiter geeigneten Materials ausmacht.

4. Pastöse Masse nach einem der voranstehenden Ansprüche, **dadurch gekennzeichnet, dass** die Matrix (A) zusätzlich einen Plastifizierer enthält.

5. Pastöse Masse nach einem der voranstehenden Ansprüche, **dadurch gekennzeichnet, dass** die Mischung weiterhin nanokristallinen Kohlenstoff enthält.

6. Pastöse Masse nach einem der Ansprüche 1 bis 5, **dadurch gekennzeichnet, dass** die Matrix (A) ein Harz ist, das ausgewählt ist unter vernetzbaren Additionspolymeren und Kondensationsharzen, insbesondere Aminoplasten, Phenoplasten, Epoxidharzen, Polyestern, Polycarbamaten und Methylmethacrylat-Reaktionsharzen, oder dass das organische Polymere der Matrix (A) ausgewählt ist unter natürlichen Polymeren und synthetischen Polymeren sowie Mischungen hiervon, insbesondere natürlichen und synthetischen Polysacchariden, Proteinen, Harzen, Wachsen und halogenierten und nichthalogenierten Kautschuken, Thermoplasten und Thermoelastomeren.

7. Selbsttragende oder auf einem Substrat aufliegende, in elektrochemischen Bauelementen verwendbare Festkörperelektrolytschicht, umfassend eine heterogene Mischung aus

   (A) 0-70 Gew.-% einer mindestens ein organisches Polymer enthaltenden oder hieraus bestehenden Matrix wie in einem der Ansprüche 1 bis 6 definiert und
   (B) 30-100 Gew.-% eines als Festkörperelektrolyt oder ionischer Zwischenleiter geeigneten, in der Matrix nicht löslichen, anorganischen Materials in Form einer Festsubstanz,

   **dadurch gekennzeichnet, dass** mindestens 30 Gew.-% des als Festkörperelektrolyt oder ionischer Zwischenleiter geeigneten Materials in Form eines nanokristallinen Pulvers vorliegen.

8. Selbsttragende oder auf einem Substrat aufliegende Schicht nach Anspruch 7, **dadurch gekennzeichnet, dass** die Schicht eine flexible Schicht ist.

9. Selbsttragender oder auf einem Substrat aufliegender Schichtverbund mit elektrochemischen Eigenschaften, der mindestens zwei als Elektrode fungierende und eine als Elektrolyt fungierende Schichten aufweist, wobei die als Elektrolyt fungierende Schicht eine heterogene Mischung aus

   (A) 0-70 Gew.-% einer mindestens ein organisches Polymer enthaltenden oder hieraus bestehenden Matrix wie in einem der Ansprüche 1-6 definiert und
   (B) 30-100 Gew.-% eines als Festkörperelektrolyt oder ionischer Zwischenleiter geeigneten, in der Matrix nicht löslichen, anorganischen Materials in Form einer Festsubstanz

   umfasst, **dadurch gekennzeichnet, dass** mindestens 30 Gew.-% des als Festkörperelektrolyt oder ionischer Zwischenleiter geeigneten Materials in Form eines nanokristallinen Pulvers vorliegen.

10. Selbsttragender oder auf einem Substrat aufliegender Schichtverbund nach Anspruch 9, worin die beiden Elektroden eine positive und eine negative Elektrode sind oder worin sie gleichgerichtete Elektroden sind.

11. Schichtverbund mit elektrochemischen Eigenschaften nach einem der Ansprüche 9 oder 10, **dadurch gekennzeichnet, dass** zwischen der als untere Ableitelektrode dienenden Schicht und der Schicht mit positivem Elektrodenmaterial und/oder zwischen der als obere Ableitelektrode dienenden Schicht und der Schicht mit negativem Elektrodenmaterial nanokristalliner Kohlenstoff vorhanden ist.

12. Wiederaufladbare, elektrochemische Zelle in Dickschichttechnologie, umfassend einen Schichtverbund mit elektrochemischen Eigenschaften nach einem der Ansprüche 9 bis 11.

13. Verfahren zum Herstellen einer pastösen Masse nach einem der Ansprüche 1 bis 6, **dadurch gekennzeichnet, dass** das organische Polymer, dessen Vorstufen oder dessen Präpolymere mit einem Plastifiziermittel und einem als Festkörperelektrolyt oder ionischer Zwischenleiter geeigneten Material (B) zusammengegeben und innig vermischt wird, anschließend ein Lösungsmittel zugegeben wird, in dem sich hauptsächüch der Plastifizierer löst, und schließlich der in dem Lösungsmittel gelöste Plastifizierer aus der Masse herausgewaschen und die Masse ggf. vom Lösungsmittel befreit wird.

14. Verfahren zum Herstellen einer pastösen Masse nach einem der Ansprüche 1 bis 6 und 13, **dadurch gekennzeichnet, dass** das als Festkörperelektrolyt oder ionischer Zwischenleiter geeignete Material (B) **dadurch** hergestellt wurde, dass normalkristallines Material in einer dieses Material nicht lösenden Flüssigkeit suspendiert wird und Salz(e) der für das nanokristalline Material vorgesehenen Kationen zugesetzt werden, die in dieser Flüssigkeit löslich ist/ sind, sodann das oder die für das nanokristalline Material vorgesehenen Anion(en) in Form von Salz(en) zugesetzt werden, das/die sich ebenfalls in der Flüssigkeit löst/lösen, wobei die genannten Kationen und Anionen derart ausgewählt wurden, dass das nanokristalline Material auspräzipitiert, und schließlich die Flüssigkeit im wesentlichen entfernt wird.

15. Verwendung einer pastösen Masse, umfassend

(A) 0-70 Gew.-% einer mindestens ein organisches Polymer, dessen Vorstufen oder dessen Präpolymere enthaltenden oder hieraus bestehenden Matrix und
(B) 30-100 Gew.-% eines als Festkörperelektrolyt oder ionischer Zwischenleiter geeigneten, in der Matrix vorzugsweise nicht löslichen, anorganischen Materials in Form einer Festsubstanz, und zusätzlich ggf. ein Suspensionsmittel für (B)

wobei mindestens 30 Gew.% des als Festkörperelektrolyt oder ionischer Zwischenleiter geeigneten Materials in Form eines nanokristallinen Pulvers vorliegen,
zur Herstellung von in elektrochemischen Bauelementen verwendbaren Festelektrolytschichten.

16. Verwendung einer pastösen Masse nach Anspruch 15, wobei die Matrix (A) zusätzlich einen Plastifizierer enthält.

17. Verwendung einer pastösen Masse nach Anspruch 15 oder 16, wobei die Matrix (A) ein Harz ist, das ausgewählt ist unter vernetzbaren Additionspolymeren und Kondensationsharzen, insbesondere Aminoplasten, Phenoplasten, Epoxidharzen, Polyestern, Polycarbamaten und Methylmethacrylat-Reaktionsharzen, oder daß das organische Polymere der Matrix (A) ausgewählt ist unter natürlichen Polymeren und synthetischen Polymeren sowie Mischungen hiervon, insbesondere natürlichen und synthetischen Polysacchariden, Proteinen, Harzen, Wachsen und halogenierten und nichthalogenierten Kautschuken, Thermoplasten und Thermoelastomeren.

## Claims

1. Pasty compositions for the production of solid electrolyte layers which can be used in electrochemical components, consisting of

(A) 0-70 wt.% of a matrix containing at least one organic polymer, its precursors or its prepolymers or consisting thereof and
(B) 30-100 wt.% of an inorganic material in the form of a solid substance which is suitable as a solid-state electrolyte or ionic semiconductor and which is preferably not soluble in the matrix, and in addition optionally a suspension agent for (B),

**characterised in that** at least 30 wt.% of the material which is suitable as a solid-state electrolyte or ionic semiconductor is present in the form of a nanocrystalline powder.

2. Pasty composition according to claim 1, **characterised in that** the nanocrystalline powder is chemically identical to the remaining material which is suitable as a solid-state electrolyte or ionic semiconductor or chemically different from the latter.

3. Pasty composition according to claim 1 or 2, **characterised in that** the quantity of nanocrystalline powder accounts for at least 70 wt.%, more preferably at least 80 wt.% and in most cases preferably at least 90 wt.% of the material which is suitable as a solid-state electrolyte or ionic semiconductor.

4. Pasty composition according to one of the preceding claims, **characterised in that** the matrix (A) additionally contains a plasticiser.

**5.** Pasty composition according to one of the preceding claims, **characterised in that** the mixture also contains nanocrystalline carbon.

**6.** Pasty composition according to one of claims 1 to 5, **characterised in that** the matrix (A) is a resin, which is selected from crosslinkable addition polymers and condensation resins, in particular aminoplasts, phenoplasts, epoxy resins, polyesters, polycarbamates and methylmethacrylate reaction resins, or **in that** the organic polymer of the matrix (A) is selected from natural polymers and synthetic polymers and mixtures thereof, in particular natural and synthetic polysaccharides, proteins, resins, waxes and halogenated and non-halogenated rubbers, thermoplastics and thermoelastomers.

**7.** Self-supporting solid-state electrolyte layer or solid-state electrolyte layer lying on a substrate which can be used in electrochemical components, comprising a heterogeneous mixture of

> (A) 0-70 wt.% of a matrix containing at least one organic polymer or consisting thereof, as defined in one of claims 1 to 6 and
> (B) 30-100 wt.% of an inorganic material which is suitable as a solid-state electrolyte or ionic semiconductor and which is not soluble in the matrix, in the form of a solid substance,

**characterised in that** at least 30 wt.% of the material which is suitable as a solid-state electrolyte or ionic semiconductor is present in the form of a nanocrystalline powder.

**8.** Self-supporting layer or layer lying on a substrate according to claim 7, **characterised in that** the layer is a flexible layer.

**9.** Self-supporting layer composite or layer composite lying on a substrate having electrochemical properties, which has at least two layers acting as electrode and one layer acting as electrolyte, wherein the layer acting as electrolyte comprises a heterogeneous mixture of

> (A) 0-70 wt.% of a matrix containing at least one organic polymer or consisting thereof, as defined in one of claims 1 - 6 and
> (B) 30-100 wt.% of an inorganic material which is suitable as a solid-state electrolyte or ionic semiconductor and which is not soluble in the matrix, in the form of a solid substance,

**characterised in that** at least 30 wt.% of the material which is suitable as a solid-state electrolyte or ionic semiconductor is present in the form of a nanocrystalline powder.

**10.** Self-supporting layer composite or layer composite lying on a substrate according to claim 9, wherein the two electrodes are a positive and a negative electrode or wherein they are equidirectional electrodes.

**11.** Layer composite having electrochemical properties according to one of claims 9 or 10, **characterised in that** nanocrystalline carbon is present between the layer serving as lower bleeder electrode and the layer having positive electrode material and/or between the layer serving as upper bleeder electrode and the layer having negative electrode material.

**12.** Rechargeable, electrochemical cell in thick-layer technology, comprising a layer composite having electrochemical properties according to one of claims 9 to 11.

**13.** Process for producing a pasty composition according to one of claims 1 to 6, **characterised in that** the organic polymer, its precursors or its prepolymers is combined and intimately mixed with a plasticiser and a material (B) which is suitable as a solid-state electrolyte or ionic semiconductor, then a solvent is added, in which mainly the plasticiser is dissolved, and finally the plasticiser dissolved in the solvent is washed out from the composition and the composition is optionally freed from the solvent.

**14.** Process for producing a pasty composition according to one of claims 1 to 6 and 13, **characterised in that** the material (B) which is suitable as a solid-state electrolyte or ionic semiconductor was produced **in that** normal-crystalline material is suspended in a liquid which does not dissolve this material and salt (s) of the cations provided for the nanocrystalline material, and which is/are soluble in this liquid, are added, then the anion(s) provided for the nanocrystalline material are added in the form of salt(s), which are likewise dissolved in the liquid, wherein the said cations and anions have been selected such that the nanocrystalline material is precipitated out, and finally the liquid is essentially removed.

**15.** Use of a pasty composition, comprising

> (A) 0-70 wt.% of a matrix containing at least one organic polymer, its precursors or its prepolymers or consisting thereof and
> (B) 30-100 wt.% of an inorganic material which is suitable as a solid-state electrolyte or ionic semiconductor and which is preferably not soluble in the matrix, in the form of a solid substance, and in addition optionally a suspension agent for (B),

wherein at least 30 wt.% of the material which is suitable as a solid-state electrolyte or ionic semiconductor is present in the form of a nanocrystalline powder, for the production of solid electrolyte layers which can be used in electrochemical components.

16. Use of a pasty composition according to claim 15, wherein the matrix (A) additionally contains a plasticiser.

17. Use of a pasty composition according to claim 15 or 16, wherein the matrix (A) is a resin, which is selected from crosslinkable addition polymers and condensation resins, in particular aminoplasts, phenoplasts, epoxy resins, polyesters, polycarbamates and methylmethacrylate reaction resins, or in that the organic polymer of the matrix (A) is selected from natural polymers and synthetic polymers and mixtures thereof, in particular natural and synthetic polysaccharides, proteins, resins, waxes and halogenated and non-halogenated rubbers, thermoplastics and thermoelastomers.

## Revendications

1. Masses pâteuses pour fabriquer des couches d'électrolyte solide utilisables dans des composants électrochimiques et constituées des éléments suivants :

    (A) 0 à 70% en poids d'une matrice contenant au moins un polymère organique, ses précurseurs ou ses prépolymères ou constituée d'un de ceux-ci, et
    (B) 30 à 100% en poids d'un matériau inorganique convenant comme électrolyte solide ou conducteur intermédiaire ionique, de préférence non soluble dans la matrice, sous la forme d'une substance solide et, en plus, éventuellement un milieu de suspension pour (B), **caractérisées en ce qu'**au moins 30% en poids du matériau convenant comme électrolyte solide ou conducteur intermédiaire ionique sont présents sous la forme d'une poudre nanocristalline.

2. Masse pâteuse selon la revendication 1, **caractérisée en ce que** la poudre nanocristalline est identique chimiquement à l'autre matériau convenant comme électrolyte solide ou conducteur intermédiaire ionique ou en est chimiquement différente.

3. Masse pâteuse selon la revendication 1 ou 2, **caractérisée en ce que** la quantité de poudre nanocristalline constitue au moins 70% en poids, mieux encore au moins 85% en poids et, bien mieux encore, au moins 90% en poids du matériau convenant comme électrolyte solide ou conducteur intermédiaire ionique.

4. Masse pâteuse selon l'une quelconque des revendications précédentes, **caractérisée en ce que** la matrice (A) contient en plus un plastifiant.

5. Masse pâteuse selon l'une quelconque des revendications précédentes, **caractérisée en ce que** le mélange contient en outre du carbone nanocristallin.

6. Masse pâteuse selon l'une quelconque des revendications 1 à 5, **caractérisée en ce que** la matrice (A) est une résine qui est choisie parmi des polymères d'addition réticulables et des résines de condensation, en particulier des aminoplastes, des phénoplastes, des résines époxydes, des polyesters, des polycarbamates et des résines de réaction avec le méthacrylate de méthyle ou **en ce que** le polymère organique de la matrice (A) est choisi parmi des polymères naturels et des polymères synthétiques ainsi que leurs mélanges, en particulier des polysaccharides naturels et synthétiques, des protéines, des résines, des cires et des caoutchoucs halogénés et non halogénés, des thermoplastiques et des thermoélastomères.

7. Couche d'électrolyte solide autoportante ou appliquée sur un substrat, utilisable dans des composants électrochimiques, comprenant un mélange hétérogène constitué des éléments suivants :

    (A) 0 à 70% en poids d'une matrice contenant au moins un polymère organique ou constituée de celui-ci, comme cela est défini dans l'une des revendications 1 à 6, et
    (B) 30 à 100% en poids d'un matériau inorganique convenant comme électrolyte solide ou conducteur intermédiaire ionique, non soluble dans la matrice, sous la forme d'une substance solide,

    **caractérisée en ce qu'**au moins 30% en poids du matériau convenant comme électrolyte solide ou conducteur intermédiaire ionique se présentent sous la forme d'une poudre nanocristalline.

8. Couche d'électrolyte solide autoportante ou appliquée sur un substrat selon la revendication 7, **caractérisée en ce que** la couche est une couche flexible.

9. Composite stratifié autoportant ou appliqué sur un substrat ayant des propriétés électrochimiques, qui présente au moins deux couches faisant fonction d'électrode et une couche faisant fonction d'électrolyte, la couche faisant fonction d'électrolyte comprenant un mélange hétérogène constitué des éléments suivants :

    (A) 0 à 70% en poids d'une matrice contenant au moins un polymère organique ou constituée de celui-ci, comme cela est défini dans l'une des revendications 1 à 6, et

(B) 30 à 100% en poids d'un matériau inorganique convenant comme électrolyte solide ou conducteur intermédiaire ionique, non soluble dans la matrice, sous la forme d'une substance solide,

**caractérisé en ce qu'**au moins 30% en poids du matériau convenant comme électrolyte de corps solide ou conducteur intermédiaire ionique se présentent sous la forme d'une poudre nanocristalline.

10. Composite stratifié autoportant ou appliqué sur un substrat selon la revendication 9, dans lequel les deux électrodes sont une électrode positive et une électrode négative ou dans lequel ce sont des électrodes rectifiées.

11. Composite stratifié ayant des propriétés électrochimiques selon l'une quelconque des revendications 9 ou 10, **caractérisé en ce que** du carbone nanocristallin est présent entre la couche servant d'électrode inférieure de dérivation et la couche avec le matériau d'électrode positif et/ou la couche servant d'électrode supérieure de dérivation et la couche avec le matériau d'électrode négatif.

12. Pile électrochimique rechargeable en technologie des couches épaisses, comprenant un composite stratifié ayant des propriétés électrochimiques selon l'une quelconque des revendications 9 à 11.

13. Procédé de fabrication d'une masse pâteuse selon l'une quelconque des revendications 1 à 6, **caractérisé en ce que** le polymère organique, ses précurseurs ou ses prépolymères sont additionnés conjointement et mélangés intimement avec un agent plastifiant et un matériau convenant comme électrolyte solide ou conducteur intermédiaire ionique (B) et sont intimement mélangés, **en ce que** l'on ajoute ensuite un solvant dans lequel le plastifiant se dissout principalement et, enfin, **en ce que** le plastifiant dissout dans le solvant est éliminé par lavage de la masse et **en ce que** la masse est éventuellement débarrassée du solvant.

14. Procédé de fabrication d'une masse pâteuse selon l'une quelconque des revendications 1 à 6 et 13, **caractérisé en ce que** l'on fabrique le matériau convenant comme électrolyte solide ou conducteur intermédiaire ionique (B), **en ce que** le matériau de cristallinité normale est mis en suspension dans un liquide ne dissolvant pas ce matériau et on ajoutant un ou des sels des cations prévus pour le matériau nanocristallin, qui est ou sont solubles dans ce liquide, puis on ajoute le ou les anions prévus pour le matériau nanocristallin sous forme de sel(s) qui se dissout/dissolvent également dans le liquide, les cations et les anions cités étant choisis de sorte que le matériau nanocristallin précipite et **en ce que**, enfin, le liquide est sensiblement éliminé.

15. Utilisation d'une masse pâteuse comprenant :

(A) 0 à 70% en poids d'une matrice contenant au moins un polymère organique, ses précurseurs ou ses prépolymères ou constituée d'un de ceux-ci, et

(B) 30 à 100 % en poids d'un matériau inorganique convenant comme électrolyte solide ou conducteur intermédiaire ionique, de préférence non soluble dans la matrice, sous la forme d'une substance solide, et

en plus, éventuellement un milieu de suspension pour (B),
au moins 30% en poids du matériau convenant comme électrolyte solide ou conducteur intermédiaire ionique se présentant sous la forme d'une poudre nanocristalline,
pour fabriquer des couches d'électrolyte solide utilisables dans les composants électrochimiques.

16. Utilisation d'une masse pâteuse selon la revendication 15 dans laquelle la matrice (A) contient en plus un plastifiant.

17. Utilisation d'une masse pâteuse selon la revendication 15 ou 16, dans laquelle la matrice (A) est une résine qui est choisie parmi des polymères d'addition réticulables et des résines de condensation, en particulier des aminoplastes, des phénoplastes, des résines époxydes, des polyesters, des polycarbamates et des résines de réaction avec du méthacrylate de méthyle ou en ce que le polymère organique de la matrice (A) est choisi parmi des polymères naturels et des polymères synthétiques ainsi que leurs mélanges, en particulier des polysaccharides naturels et synthétiques, des protéines, des résines, des cires et des caoutchoucs halogénés et non halogénés, des thermoplastiques et des thermoélastomères.

Figur 3

EP 1 194 963 B1